# EUROPEAN PATENT SPECIFICATION

(11) **EP 2 691 316 B1**
(45) Date of publication and mention of the grant of the patent: **06.05.2015**
(21) Application number: 12714131.5
(22) Date of filing: 27.03.2012
(51) Int. Cl.: B65D 85/804, A47J 31/08

(54) **BEVERAGE CARTRIDGE WITH FILTER ELEMENT**
GETRÄNKEPATRONE MIT FILTERELEMENT
CARTOUCHE DE BOISSON AVEC ÉLÉMENT FILTRANT

(30) Priority: 28.03.2011 US 201113073647
(43) Date of publication of application: 05.02.2014
(73) Proprietor: Intercontinental Great Brands LLC, East Hanover, NJ 07936 (US)
(72) Inventor: ZELLER, Bary L., Glenview, Illinois 60025 (US); APISCOPA, Rick P., Tarrytown, New York 10591 (US); WISEMAN, Greg A., New York, New York 10022 (US); PORBANDARWALA, Sarita V., White Plains, New York 10601 (US); GIBSON, Tom A., Ridgewood, New Jersey 07450 (US)
(74) Representative: Boult Wade Tennant
(86) International application number: PCT/US2012/030722
(87) International publication number: WO 2012/135204

(56) References cited:
- GB-A- 1 427 375
- US-A- 5 871 644
- US-B2- 7 287 461

## Description

### FIELD

The present invention relates to a coffee cartridge or capsule having a microperforated membrane or filter element.

### BACKGROUND

The ability to brew beverages for consumption of the beverage thereafter is a centuries old custom. In that time, all manner of brewing devices have been created to facilitate such brewing. In modern times, many types and kinds of electro-mechanical consumer and commercial grade brewers have been created to facilitate the ready and efficient brew of all types of consumable beverages including but not limited to all manner of teas, coffee and coffee-derived products.

Filter paper for use in brewing has changed little since its first creation in ancient societies. It has remained a thin substrate that, while holding particles for brewing, allows the passage of fluid from such particles when water passes therethrough. Liquid from such fluid becomes a consumable beverage when later captured. The technology for such filter paper widely available today is little different than that first created by ancient cultures. For modern brewers, whether in an open system or a closed system, an appropriate filter paper that matches and enhances advancements in brewing technology is needed.

The idea behind such a new and innovative filter paper or filter element is for it to raise the degree of permeability for fluids (i.e., liquids and gases) while maintaining the strength that such filter element must have, especially when wetted during brewing. Such increased permeability would provide many benefits in the brew process and ultimately to the brewed beverage itself.

It is well known that roasting green coffee beans produces gases that diffuse from coffee beans and/or ground coffee particles soon after roasting and over time prior to their use and consumption. Though such diffusion often occurs at a much faster rate after coffee beans are ground, it may still take many hours or days for most of the gas to diffuse from the coffee. Coffee products are typically held for a suitable period of time to enable them to sufficiently degas. It is important to allow such holding periods prior to packaging roasted coffee for distribution and sale. However, some roasted coffee products, particularly those manufactured from very dark roast, low-moisture, and/or decaffeinated beans, are known to be very slow to degas and may not degas to an extent that allows them to be used in certain packages or applications without the need for special handling.

Packaging inadequately degassed coffees in soft pods or rigid capsules or cartridges designed for use in on-demand pressure brewers, such as T-disc cartridges used in the TASSIMO® system, can result in problematic brewing performance related to the release of large volumes of gas during brewing. Excessive gas release may increase pressure inside a cartridge to undesirable levels, restrict water flow through the filter element, slow or halt brewing, produce noise, create unwanted beverage foam, or cause other problems related either to the handling of a cartridge such as a T-disc cartridge of the type described hereinbelow or in the brewing of a beverage from a cartridge.

During brewing, it is important to enhance the ability of brewing by use of a filter that facilitates greater permeability through a filter element when brewable particles are contacted by a liquid. Current filters primarily accomplish liquid or gaseous permeability by choice of use of the materials used in the filter paper itself; e.g., cellulosic materials and/or fibrous materials. The structure of such filters has been a secondary consideration though a contributing factor to permeability.

Also during brewing, high content gas release or emission is undesirable and can lead to perceptions of poor craftsmanship in a coffee brewer or its coffee cartridge or to concerns about a brewer's proper function or operation in the brewer and/or cartridge. Often, when such high content gas emissions occur, it is audible and noticeable by a consumer. Such audible and noticeable manifestation of gas emissions can be highly undesirable and lead to negative perceptions of performance in a brewer. Also undesirable, in either an open or a closed brewing system, is the presence of excess moisture or pools of water collected in and around filter paper because of a lack of permeability of the filter element when wetted.

It is therefore desired that a filter element for brewing brewable beverages in a closed or open brewing system be found. Remarkably, the present disclosure discussed in greater detail hereinbelow provides such a filter paper for use in either a closed or open brewing system.
US-A-5871644 discloses a filter for coffee comprising a fibrous material. The fibrous material has pores with an average pore width of at least about 0.1 mm measured at a fibre density of about 50% of the original fibre density of the material. The average pore width is in a range from 0.1 mm to 0.7 mm approximately or in a range from 0.1 mm to 0.4 mm approximately. The material may be paper. The pores are made by piercing with needles or by subjecting the fibrous material to water jets, providing an irregular pore edge.

### BRIEF SUMMARY

This disclosure provides a coffee cartridge for use with freshly roasted and ground coffee in a suitable beverage brewer, comprising:
a. Freshly roasted and ground undegassed coffee;
b. A membrane, said membrane encapsulating said freshly roasted and ground undegassed coffee;
c. A number of microperforations positioned within said membrane for the release of gas from said freshly roasted and ground undegassed coffee during brewing; and
d. A semi-rigid structure encapsulating said membrane.
   Accordingly, this disclosure provides a beverage cartridge for use in a beverage maker, comprising:
   a. A chamber, the chamber having at least one substantially enclosed portion, the at least one substantially enclosed portion having a base with a perimeter and a wall connected to the perimeter of the base, the chamber receiving and housing undegassed coffee therein;
   b. A beverage filtering device, having
      i. A filter carrier device operatively connected to the chamber, the filter carrier being positioned within the chamber;
      ii. A filter element having a first surface and a second surface positioned oppositely to the first surface, the second surface being at least partially attached to the filter carrier, the filter element having a plurality of microperforafions positioned through the filter element, the plurality of microperforations extending from the first surface to the second surface of the filter element; and
   c. A sealing element positioned onto the wall of the chamber whereby the beverage cartridge is sealed and enclosed;
whereby the beverage filtering device increases the permeability of fluid flowing through said beverage cartridge during brewing.

The beverage filtering device increases the permeability of fluid, whether liquid or gas, flowing through the beverage cartridge during brewing. The number of microperforations within the filter element ranges from between about 2 to about 1000 microperforations. Preferably, the microperforations within the filter element range from between about 10 to about 500 microperforations.

The beverage cartridge herein preferably contains beverage media that are freshly ground particles from coffee beans. In such practice, the freshly ground coffee particles are packaged and sealed within a beverage cartridge just after the roasted coffee is freshly ground. The ground coffee particles have near maximum gas content at packaging of the ground coffee particles. In one embodiment herein, the freshly ground coffee is dark roasted and has a maximum gas content during brewing.

The filter element may be formed from a cellulosic material, a non woven material, from one or more types of synthetic fibers or a combination of at least two types of materials. The filter element herein comprises open areas positioned on its first surface and its second surface. In sum, the open areas comprise greater than about 2% of the total surface area of the filter element. Preferably, the open areas on the first and second surfaces of the filter element are greater than about 10% of the total surface area of the filter element. Most preferably, the open areas on the first and second surfaces are greater than about 15% of the total surface area of the filter element.

The microperforations used herein each have an average diameter ranging from between about 0.1 mm to about 0.8 mm. Preferably, each microperforation comprises an average diameter ranging from between about 0.2 mm to about 0.7 mm. Most preferably, the microperforations comprise an average diameter ranging from between about 0.3 mm to 0,8 mm.

Preferred beverage media herein are freshly ground coffee particles. Herein, the freshly ground coffee particles may be packaged and sealed within a beverage cartridge just after freshly ground coffee particles are roasted. The ground coffee particles may have a near maximum gas content at packaging of the ground coffee particles.

Importantly, a choice beverage delivery mechanism herein may be a rigid cartridge, a non-rigid or semi-rigid pod that contains a beverage media or a filter element itself for use within a brewer. The filter element provides increased and enhanced permeability of fluid therethrough.

The present disclosure also discloses a filter element for use in brewing beverages, e.g., in open system beverage brewers. The filter element comprises a first surface, a second surface positioned oppositely to the first surface, and a plurality of microperforations positioned through the filter element. The plurality of microperforations extends from the first surface to the second surface of the filter element. An open surface resides on the first and second surfaces of the filter element containing at least 5% of a total surface area of the first and second surfaces of the first element. The filter element allows fluid to pass therethough for brew of a beverage. The filter element is encapsulated within a capsule containing undegassed coffee.

### BRIEF DESCRIPTION OF THE DRAWINGS

While the specification concludes with claims particularly pointing out and distinctly claiming the invention, it is believed that the embodiments set forth herein will be better understood from the following description in conjunction with the accompanying figures, in which like reference numerals identify like elements and in which:
FIG. 1 is cross-sectional drawing of the cartridge according to a preferred embodiment of the present invention;
FIG. 2a shows an assembled top view of the preferred embodiment of the beverage cartridge herein;
FIG. 2b shows an assembled bottom view of the preferred embodiment of FIG. 2a;
FIG. 3 shows an exploded view of the preferred embodiment of the beverage cartridge herein; and

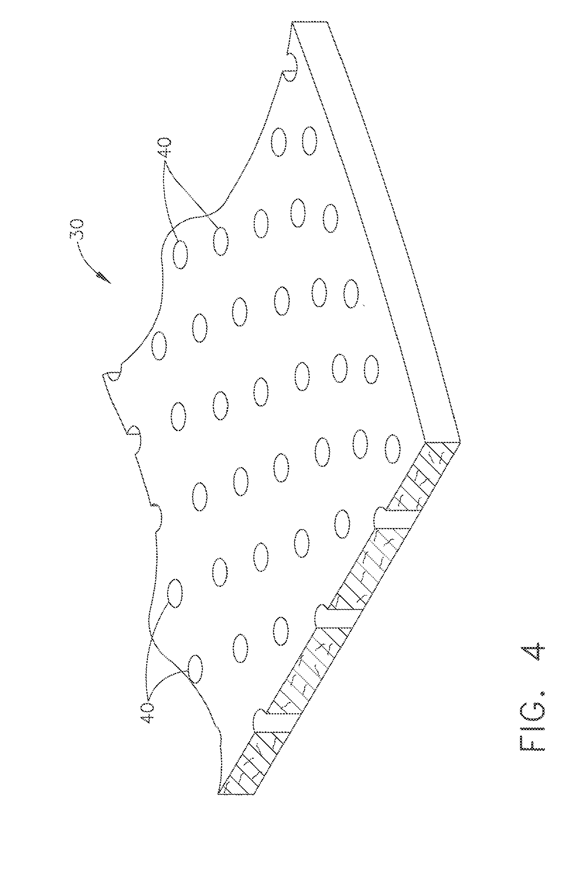

FIG. 4 provides a partial frontal view of the filter element herein showing the microperforations inserted therethrough,

### TERMS

The description of the terms hereinbelow is intended as a guide and aid to understanding but is not intended as limiting the meaning of these terms.

The term "closed brewing system" is meant herein to mean a brewing apparatus that uses an enclosed brewing capsule that contains at least a brew substrate and a filter element positioned within the enclosed brewing capsule.

The term "open brewing system" is meant herein to mean a brewing apparatus that uses a brewing chamber that is open to atmospheric pressure conditions.

The term "dark roasted" refers herein to the produced result of roasted coffee beans that have been roasted longer and at high temperatures resulting in coffee beans having a highly opaque color.

The term "freshly-ground" refers herein to coffee beans that have been ground into discernible particles, but not powderized, i.e., not transformed into a powdered form.

The term "near maximum gas content" or "maximum gas content" means the highest measurable gas content of coffee beans, typically just after roasting and grinding of the coffee beans.

The term "non-woven" or "nonwovens" herein means fibers used to make a fibrous material or fabric that does not use weaving for such making.

The term "synthetics" or "synthetic fibers" refers to fibers for use herein that are substantially man-made and that do not occur naturally or from natural substances.

By the term "beverage cartridge" or "cartridge" it is meant herein a device that holds resident beverage media for brewing. The cartridge herein is inserted into an appropriately configured beverage brewer for brew or creation of a beverage from the qualities and characteristics resident within the beverage media.

By the term "beverage media", "beverage medium" or "beverage particles" it is meant herein particles of a particular kind and character that contain the flavor and qualities of a beverage to be brewed or otherwise created therefrom. It is noted herein that the term "media" is used as the plural form of the term "medium".

By the term "open area" it is meant herein those portions of the filter element that contain microperforations that in the aggregate form a cumulative open area upon the filter element herein.

By the term "closed area" it is meant herein those portions of the filter element that do not contain microperforations that in the aggregate form a cumulative closed area upon the filter element herein.

By the term "filter element" or "filter paper" herein it is meant a substrate through which a beverage from beverage particles is brewed.

By the term "beverage filter" it is meant herein the specific structure that houses the beverage media herein and is itself housed within the beverage cartridge.

By the term "brewable particles" or "brew substrate" it is meant herein beverage particles or media from which the passage of a liquid therethrough or over mixes with constituents of the particles to produce a beverage containing the particle constituents as part of the brewed beverage.

### DETAILED DESCRIPTION OF THE PREFERRED EMBODIMENTS

In practice, the beverage filtering device increases the permeability of fluid, whether liquid or gas, flowing through the beverage cartridge during brewing. The number of microperforations within the filter element ranges from between about 2 to about 1000 microperforations. Preferably, the microperforations within the filter element range from between about 10 to about 500 microperforations.

The beverage cartridge herein preferably contains beverage media that are freshly ground particles from coffee beans. In such practice, the freshly ground coffee particles are packaged and sealed within the beverage cartridge just after the freshly ground coffee particles are roasted. At this point, the ground coffee particles have a near maximum gas content at packaging of the ground coffee particules. In one embodiment herein, the freshly ground coffee is dark roasted and has a maximum gas content during brewing.

The filter element may be formed from a cellulosic material, a non woven material, from one or more types of synthetic fibers or a combination of at least two types of materials. The filter element herein comprises open areas positioned on the first surface and the second surface of the filter element that are greater than about 2% of the total surface area of the filter element. Preferably, the open areas on the first and second surfaces of the filter element are greater than about 10% of the total surface area of the filter element. Most preferably, the open areas on the first and second surfaces are greater than about 15% of the total surface area of the filter element.

The microperforations used herein are created having an average diameter ranging from between about 0.1 mm to about 0.8 mm. Preferably, each microperforation comprises a diameter ranging from between about 0.2 mm to about 0.7 mm. Most preferably, the microperforations comprise a diameter ranging from between about 0.3 mm to about 0.6 mm.

Importantly, a choice beverage delivery mechanism herein may be a rigid cartridge, a non-rigid or semi-rigid pod that contains a beverage media or a filter element itself for use within a brewer, such filter element providing increased and enhanced permeability of fluid therethrough.

The disclosure herein also provides a filter element for use in brewing beverages. The filter element comprises a first surface, a second surface positioned oppositely to the first surface, and a plurality of microperforations positioned through the filter element. The plurality of microperforations extends from the first surface to the second surface of the filter element. Also, an open surface resides on the first and second surfaces of the filter element containing at least 5% of a total surface area of each first and second surfaces of the filter element. The cartridge herein may contain a beverage medium such as freshly ground coffee. In such practice, the freshly ground coffee particles are packaged and sealed within the beverage cartridge just after the coffee beans are roasted and ground. The ground coffee particles have a near maximum gas content at packaging of the ground coffee particles. In one embodiment herein the freshly ground coffee is dark roasted and has a maximum gas content during brewing. The filter element may be formed from a cellulosic material, a non woven material, from one or more types of synthetic fibers or a combination of at least two types of material

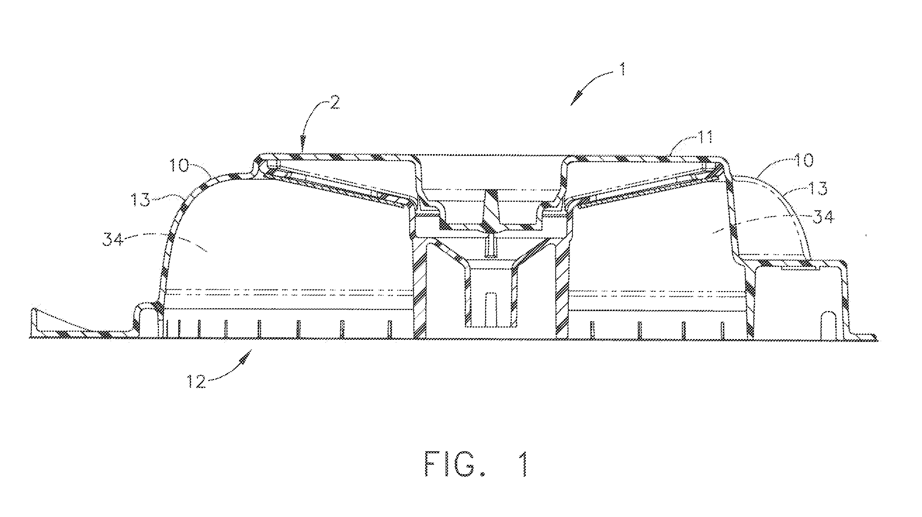

The overall shape of cartridge 1, as provided in FIG. 1, is generally circular or disc-shaped. The diameter of cartridge 1 is greater than its height Typically, the overall diameter of outer member 2 is 74.5 mm ± 6 mm and the overall height is 16 mm ± 3 mm. Also typically, the volume of cartridge 1 when assembled is 30.2 ml ± 20%.

Outer member 2 generally comprises a bowl-shaped shell 10 having a curved annular wall 13, a closed top 11 and an open bottom 12. The diameter of outer member 2 is smaller at its top 11 compared to the diameter at its bottom 12. This results from a flaring of annular wall 13 as one traverses from the closed top 11 to the open bottom 12. Annular wall 13 and closed bottom 11 together define a receptacle having an interior 34.

In preferred embodiments herein, outer member 2 is formed as a single integral piece from either high density polyethylene, polypropylene, polystyrene, polyester, or a laminate of two or more like materials or blends of such like materials. Suitable polypropylene for use herein comprises the range of polymers available from DSM UK Limited (Redditch, United Kingdom). Outer member 2 may be opaque, transparent or translucent. The manufacturing process may be by injection molding. Suitable cartridges of the kind contemplated herein are described in greater detail in U.S. Patent No. 7,287,461.

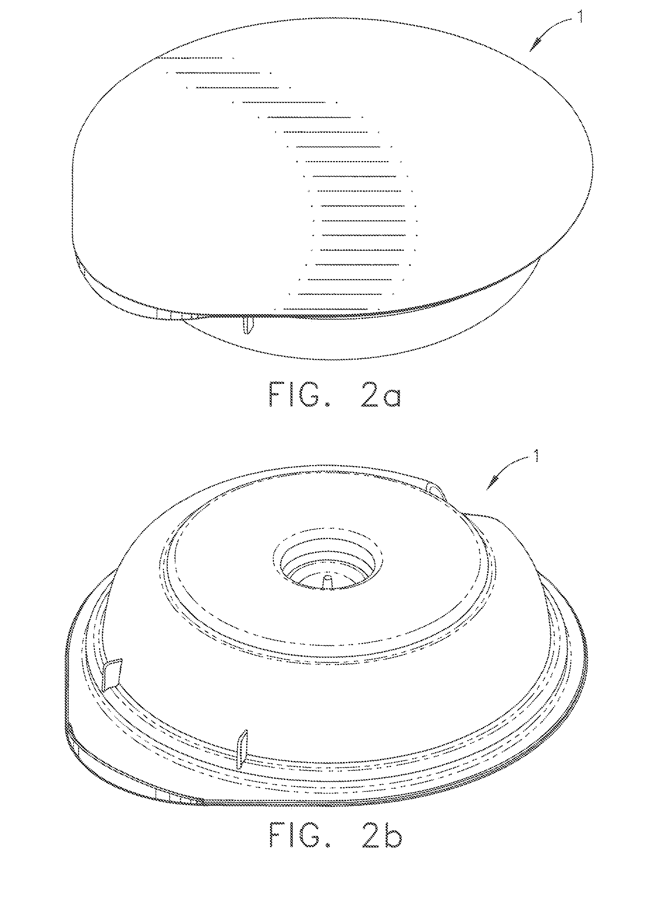

FIGS. 2a and 2b shows an assembled and preferred embodiment of beverage cartridge 1 herein. Most preferably, beverage cartridge 1 houses ground coffee. It is noted however that beverage cartridge 1 is of suitable type and construction, as noted hereinabove, for beverage particles of the kind known to emit gases during brewing and most notably coffee particles.

FIG. 2b shows the underside of cartridge 1 of FIG. 2a. Beverage cartridge 1 shown in FIGS. 2a and 2b provides a preferred execution of beverage cartridge 1, but it is important to note that other suitable designs remain within the purview of possible beverage cartridges 1 for use herein.

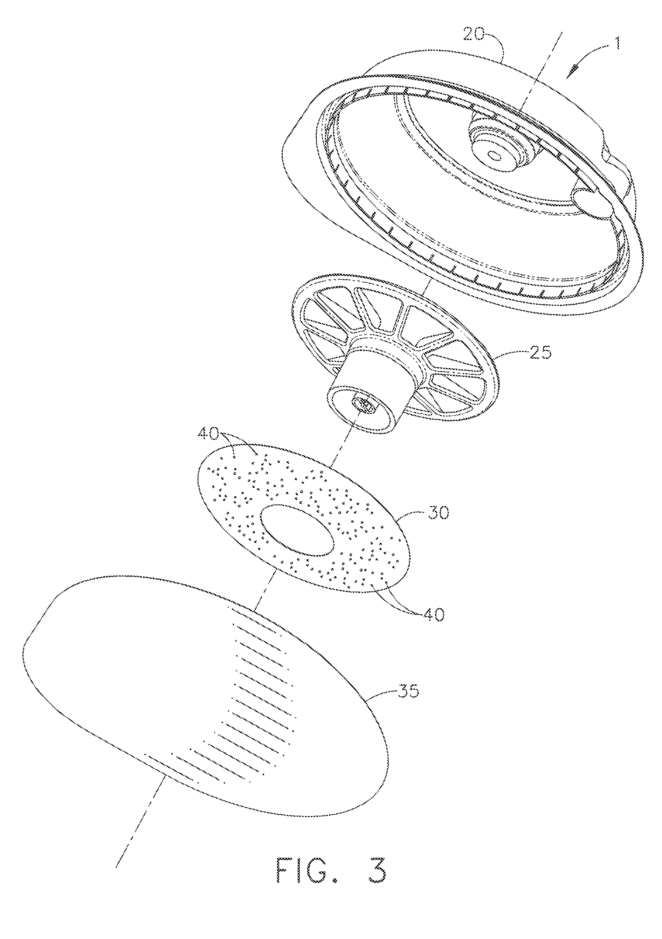

FIG. 3 shows an exploded view of the preferred embodiment of beverage cartridge 1 herein. As shown, beverage cartridge 1 comprises four main elements: particle chamber 20, filter carrier 25, filter element 30 and sealing laminate 35. Though FIG. 3 does not explicitly show its beverage media, persons of skill in the art will understand that such beverage media are housed in particle chamber 25 and kept in place by filter carrier 25 and filter element 30.

Filter element 30 is attached to filter carrier 25, preferably, by an adhesive. Use of a suitable adhesive or glue to attach filter element 30 to filter carrier 25 is well known in the art and of itself forms no part of the invention herein. When filter element 30 is attached to filter carrier 25, beverage particles housed within particle chamber 20 are substantially immovable and will substantially not penetrate through filter element 30 though there may be some beverage media migration from particle chamber 20 through filter element 30. Instances of such migration are minor.

With respect to filter element 30, it has been discovered that thoughtful introduction of very small microperforations of suitable size and number into filter element 30 can effectively diminish or eliminate gas emission issues during brewing caused by the use of less than completely degassed coffees prior to their packaging.

Preferably, the holes or microperforations 40 may be formed in filter element 30 using one or more bevel-tip syringe needles having a range of sub-millimeter diameters. This is but one method by which such microperforations 40 may be placed into filter element 30. Other suitable methods known in the art may be used so long as certain characteristics of microperforations 40 themselves are provided.

For example, it is important that microperforations 40 are less than one micron in diameter. Also, it is important that microperforations 40 extend throughout the entire depth of filter element 30. In most instances herein, microperforations 40 will have substantially the same diameter throughout its length. In practice, it is important that each microperforation's diameter be large enough to allow the passage of gas molecules but small enough to resist the passage of large and/or visually discernible amounts of beverage media therethrough.

It may be possible to provide one or more microperforations 40 having non-cylindrical shapes; e.g., a conical shape. In such instances, the diameter of one or more microperforations 40 varies through the depth of filter element 30. Such an execution may be useful in the instance whereby greater beverage medium entrapment is achieved while still allowing a suitable flow of fluid (liquid and/or gas) through filter element 30 during brewing.

The above-noted design for filter element 30 in a cartridge for beverage brewing is unique. Typically, beverage brewing through a filter medium occurs using a filter paper that by its structure offers some degree of permeability of fluids. Such commonly known filter medium (e.g., MR. COFFEE® coffee filters) are not structurally created to enhance liquid permeability therethrough other than by use of the specific materials used to make such filter medium—i.e., paper that leeches liquid therefrom when wetted.

In contrast, filter element 30 herein, which can be constructed from known materials for the use of liquid and/or gas filtering, is physically constructed with microperforations 40 to enhance, in particular, liquid permeability of a beverage therethrough. Inclusion of microperforations 40 occurs without sacrificing the structural integrity of filter element 30. To wit, the wet strength of microperforated filter element 30 herein is sufficient to maintain its structural integrity when wetted and during and after use.

In addition to the use of microperforations 40 in filter element 30, it has been surprisingly found that the combination of filter microperforation size and the number of microperforations 40 placed in filter element 30 can be optimized to allow even freshly-ground, dark-roast, low-moisture coffees having very high gas contents to be immediately packaged into cartridges 1 and brewed without the need to first hold the coffees for a period of time prior to packaging to allow them to degas.

Such immediate packaging is a significant benefit of the preferred embodiment described herein, By such immediate or substantial immediate packaging the cartridge production time can be dramatically reduced thus allowing a faster go-to-market approach for beverage cartridges 1. Without fear of performance issues in a beverage maker using beverage cartridges 1, manufacture of such beverage cartridges 1 can be expedited by removing significant degassing time from the produced beverage media; e.g., freshly ground coffee particles.

Further, it has been discovered that use of filter microperforations 40 substantially larger than the smallest beverage particles does not result in passage of a problematic amount of beverage medium to escape through filter element 30 during brewing in optimized configurations. It is believed that the upward-flow design of a representative and preferred beverage cartridge 1 herein (i.e., TASSIMO® T-disc) and the relatively small total area of microperforations created in preferred embodiments all contributed to limiting the number of particles passing through filter element 30.

Filter element 30 herein is preferably formed from cellulosic (i.e., paper based) materials. Such cellulosic materials may be mixed with non woven and/or synthetic fiber materials. Regardless of the materials or combinations thereof used, the resulting filter element 30 created will be of sufficient wet strength to resist tearing or any de-structuring of filter element 30.

In one embodiment herein, filter element 30 comprises a mat of fibers in a non-woven configuration. By the term "non-woven configuration" it is meant herein the placement of fibers in a substrate that are not woven together in a net or net-like configuration. In such a design, the beverage filter does not possess discrete porosity. By use of the term "discrete porosity", it is meant herein that a filter element 30 not being discretely porous does not provide a direct route for the escape of fluids by means of an ingress or egress. Liquids therefore permeate such filter element 30 by taking a convoluted path through small gaps between overlapping fibers.

It has been discovered, however, that introduction of even a small number of less than one millimeter in diameter microperforations or microperforations passing through filter element 30 can substantially increase its fluid permeability while still effectively limiting passage of particulate solids making up the beverage medium. It has also been discovered that such microperforations 40 beneficially do not significantly weaken the structural integrity or wet strength of filter element 30. This is an important feature, since such lack of weakening of the structural integrity of filter element 30 prevents it from tearing or bursting during brewing, especially brewing under pressurized conditions. Thus, potential performance lapses in filter element 30 have been prevented.

In practice, filter element 30 is typically much more permeable to fluids than a non-perforated filter paper. In a non-perforated filter paper, liquid passing therethrough fills and then blocks the gaps resident in the fibers thereof. As the non-perforated filter paper is wetted, its fibers expand thus collapsing any large void spaces resident within the filter paper prior to its wetting. Such occurrence depreciates the permeability of non-perforated filter paper when it is wetted.

It is believed that by use of microperforations in filter element 30, gas emitted from beverage particles therein can experience a greater rate of release of CO₂ from beverage cartridge 1 during brewing. Without the use of microperforations 40 herein, filter element 30 becomes wet and its ability to allow CO₂ to pass through it is greatly diminished.

Although it is known that inadequately degassed coffee particles typically do not provide optimal brewing in beverage cartridges, it has also been surprisingly found that certain coffees having very high initial gas contents may still produce undesirable pressure build up during brewing, even after holding for prolonged periods to reduce gas content.

Inclusions may be used that include but are not limited to sweeteners, gums, flavors, oils, and creamers, and other types of inclusions known by persons of skill in the art for beverage brewing. It should be noted herein that the use of inclusions herein is an enhancement to the increased permeability of liquid through filter element 30 to create a beverage.

The preparation of coffee for consumption is well known. What follows is a typical recitation of that process. First, coffee beans are roasted in a roaster. The roaster is set to a temperature related to the kind of roasted coffee intended to produce (e.g., from lightly roasted to dark roasted). For example, such a roaster's temperature profile may range from about 370 °F to about 540 °F (i.e., from about 188 C to about 282 C), and the beans are roasted for a period of time ranging from about 3 to about 30 minutes.

Many different mechanisms have been developed to roast coffee in order to create a better tasting coffee. Nearly all of these methods of coffee roasting use the same basic processes. Initially, green coffee beans are heated by roasting. Such heating results in the drying of the coffee beans through evaporation of water previously locked therein. Once the coffee bean reaches about 320°F (160 C) exogenous chemical reactions take place. These reactions reach their ultimate potential at around 428°F (220 C).

Further increases in pressure within the roasted coffee beans release carbon dioxide (CO₂) and water vapor from them and produce a lowering of coffee bean density. Release of the CO₂ leads to an expansion of the coffee beans in size, and a familiar splitting and popping of the beans. Once the bean has been roasted long enough (typically, from about eight (8) to about twelve (12) minutes depending on the roast required), it is rapidly cooled by use of water and cold air in a cooler.

The process of roasting coffee results in many changes in coffee beans' appearance. For example, coffee beans change from green to brown to nearly black in color depending upon the amount of heat, pressure and time applied during roasting. Typically, the hotter and/or longer green coffee beans are roasted, the more color they will take on (e.g., the very dark color associated with dark roasted coffee beans). As a result of roasting, the density of coffee beans decreases by around 20% to 40%. Also, roasted coffee beans experience, on average, an increase in volume (often by 50% or more) while also experiencing a massive loss in water content (by up to 85%),

During roasting, coffee beans can be placed in either a horizontal rotating drum or a vertical rotating drum. Coffee beans therein are then exposed to hot gases that can reach temperatures of up to 450 C upon entering the drums. Such gases cool when they are mixed with the coffee beans. The coffee beans are typically much cooler than the gases thereby creating a thermal gradient within the drum. The coffee beans remain resident within the drum, in most usual cooling processes, for between about eight (8) to about twelve (12) minutes until they have reached pre-specified roasting characteristics (e.g., volume, color, strength, etc.).

One of the most common methods of commercial coffee roasting is fluidized bed roasting. In fluidized bed roasting, coffee beans are given bursts of high velocity gases from beneath. This enables the beans to move across the fluidized bed in a controlled way, and results in a high quality end product. Since during the roasting process coffee beans increase in size, it is therefore essential to modify the speed that gas flows through the fluidized bed to ensure uniform roasting. A suitable coffee roasting method is discussed in U.S. Patent Nos. 6,207,211 and 4,737,376.

Following roasting in a fluidized bed, the beans are cooled. This cooling process is called quenching. The roasted beans may also be held for degassing after they have been particularized in a grinding process. Degassing is a process meant to relieve recently roasted coffee beans of excess gas prior to packaging and consumption. In a typical process following degassing, the roasted beans or ground coffee particles are packaged. In the disclosure herein, this degassing step is preferably either eliminated or substantially curtailed since beverage cartridges 1 of the type contemplated and shown herein allow for subsequent efficient gas emission during brewing due to the presence of microperforations 40.

### EXAMPLE

A 1 kg charge of Arabica coffee beans (50/50 blend of Centrals and Brazils) was roasted for 13 minutes in a Probat Probatino roaster and air quenched to provide a dark-roast coffee having 4.9 roast color (Dr. Lange) and 1.0% moisture. The roasted beans were stored for three days at room temperature in a vented plastic bag and then ground in a burr grinder to obtain ground coffee having about 830 micron mean (X50) particle size and 3.5 cc/g gas content. For comparison, it is desirable to package coffees in cartridges of the T-disc design described herein after degassing to gas contents of less than about 1.5 cc/g, preferably less than about 1 cc/g, to minimize potential for problematic brewing.

Immediately after grinding, individual 14.5 g coffee samples were sealed inside commercial T-discs constructed using a filter element having about a 635 square millimeter area. The filter element is paper comprising synthetic and natural fibers and has a basis weight of about 40 grams per square meter. Although ground coffee is typically held for several hours to several days to permit substantial degassing prior to sealing inside the T-discs, no hold time was used in order to maximize coffee gas content and its potential to cause brewing problems.

The filter paper in the control T-disc had no perforations, while the paper in the perforated T-disc of this EXAMPLE had a 3% open area introduced by making 261 microperforations with a 30-gauge syringe needle having a 0.305 mm diameter. These microperforations or holes were unevenly spaced in the paper, but fairly evenly divided among the ten segments formed by underlying support elements. T-discs were brewed in a BOSCH® T-45 TASSIMO® pressure brewer using a standard program coded to provide a 20 second post brew pause. The brewing chamber was opened immediately after program completion to remove the spent T-disc.

Opening the chamber after brewing the control T-disc resulted in a noisy release of pressure. Also, removing the control T-disc revealed large amounts of brewing liquid and coffee grounds left on the brewing platform—this is suboptimal. In sharp contrast, no noise or pressure release was perceived when the chamber was opened after brewing the T-disc of this EXAMPLE (i.e., beverage cartridge) and the brewing platform remained free from brewing liquid and beverage particles after removing the T-disc.

The brews were then filtered through WHATMAN® filter paper into a vacuum flask to collect small coffee particles released from the T-disc during brewing. Both brews contained small amounts of visible coffee particles and upon careful observation it appeared that slightly more sediment was collected from the filtered control brew than from coffee brewed using the T-disc of this EXAMPLE. The fresh coffee beverages were tasted and found to be very close in flavor, aroma, and overall quality.

In summary, both of the brews created from the control and EXAMPLE beverage cartridges met established quality targets, but the brewing performance of only the control T-disc was judged to be out of specification. It was also found that other combinations of perforated filter paper open area and microperforation size were effective in significantly improving the brewing performance of the T-disc of this EXAMPLE in comparison to the control T-disc.

Moving beyond the above EXAMPLE, evaluation of other un-degassed ground coffees having various roast color, grind size, and moisture demonstrated it is possible to significantly improve T-disc brewing performance. Filter paper in T-discs having microperforations ranging from about 0.1 to about 0.8 mm to 1% to 25% open area of the filter element were found to be effective, to varying extent, in reducing excessive pressure build up during brewing of un-degassed ground coffees in comparison to non-perforated control T-discs of the type described hereinabove.

It has been found herein that filter paper used for filter element 30 in beverage cartridges 1 described hereinabove preferably have open areas greater than about 2%, and especially greater than about 10% or 15%. Similarly, it has been found that use of microperforations 40 having average diameters greater than about 0.4 mm, especially greater than about 0.6 mm to about 0.8 mm, can visibly increase brew turbidity and sediment to potentially undesirable levels, especially when used to effect relatively large open areas. However, substantial amounts of brew turbidity and sediment may not be undesirable in some product applications, such as in espresso style products.

Microperforations 40 in filter element 30 may be formed in a variety of suitable ways. In one method, a laser configured to score filter element 30, is preferably used to score microperforations 40 into filter element 30. An ideal laser preferably provides micro-drilling. Suitable laser drills of the type contemplated for use herein are made by OXFORD LASERS®.

In another method for forming microperforations 40, perforation needles or wires having diameters smaller than about 0.3 mm, especially smaller than 0.2 mm or 0.1 mm can be used to place microperforations 40 into filter element 30. Use of such methods can cause the introduction of potentially very large numbers of microperforations to effect desired open areas. Further, as the diameter of a needle or wire decreases, it may become more fragile and susceptible to breaking or bending during use. Alternatively, it might be possible to create suitable microperforations using hot needle or laser microperforation forming technologies.

To substantially increase filter element 30 permeability while still substantially limiting the number of coffee particles that can pass through filter element 30 during brewing, the total area of sub-millimeter microperforations introduced was found to be generally between about 0.1% to about 15%, preferably from about 0.5% to about 10%, and more preferably from about 1.0 % to about 5%, based on the filter element surface area that is not blocked by underlying support elements.

It has been found herein that the diameter of microperforations 40 placed in filter element 30 herein ranges from between about 0.1 mm to about 0.8 mm. Preferably, the diameter of microperforations 40 ranges from between about 0.2 mm to about 0.7 mm. More preferably, the diameter of microperforations 40 ranges from between about 0.3 mm to about 0.6 mm.

Microperforations 40 can either have uniform diameters (i.e., diameters that do not vary substantially along their respective lengths) or can have varied diameters (i.e., diameters that vary from one opening of microperforation 40 to the opposite opening of microperforation 40). For filters having varied diameter microperforation sizes, the figures provided refer either to the largest microperforation diameter or to average diameter of microperforations 40.

Importantly, the average microperforation diameter should be less than the mean or average particle size of coffee particles (or any brewed beverage particles) enclosed in beverage capsule 1. Preferably, average microperforation 40 size is less than about 0.8 times the mean beverage particle size, more preferably less than about 0.6 times the mean beverage particle size, and most preferably less than about 0.4 times the mean beverage particle size. Mean beverage particle size data can be obtained using commonly known methods in the art, such as by using a standard sieve set or, more preferably, by using a SYMPATEC® particle size analyzer or comparable device.

Appropriate combinations of microperforation size and filter element 30 open area can be readily determined by experimentation for any suitable beverage cartridge 1 containing coffee particles having a given composition, roast color, grind size, gas content, and weight brewed with water having a given volume, flow rate, pressure, and temperature through microperforated filter element 30 having a given composition, structure, permeability, dimensions, and basis weight. Persons of skill in the art will understand that microperforations made in filter element 30 herein may be randomly oriented, created according to a pre-set pattern or a mixture of both.

This written description uses at least one example to disclose the invention, including the best mode, and also to enable any person skilled in the art to make and use the invention. The patentable scope of the invention is defined by the claims, and may include other examples that occur to those skilled in the art.

## Claims

1. A coffee cartridge (1) for use with freshly roasted and ground coffee in a suitable beverage brewer, comprising:
a. Freshly roasted and ground undegassed coffee;
b. A membrane (30), said membrane (30) encapsulating said freshly roasted and ground undegassed coffee;
c. A number of microperforations (40) positioned within said membrane (30) for the release of gas from said freshly roasted and ground undegassed coffee during brewing; and
d. A semi-rigid structure encapsulating said membrane (30).

2. The coffee cartridge (1) of Claim 1 wherein said freshly ground coffee is immediately placed within said membrane (30) once said freshly ground coffee is ground by grinding coffee beans.

3. The coffee cartridge (1) of any of Claims 1 or 2 wherein freshly ground coffee is dark roasted.

4. The coffee cartridge (1) of any of Claims 1 to 3 wherein said membrane (30) is formed from nonwovens and/or from one or more types of synthetic fibers.

5. A beverage cartridge (1) for use in a beverage maker, comprising:
a. A chamber (20), said chamber (20) having at least one substantially enclosed portion, said at least one substantially enclosed portion having a base with a perimeter and a wall connected to said perimeter of said base, said chamber (20) receiving and housing undegassed coffee therein;
b. A beverage filtering device, having
i. A filter carrier device (25) operatively connected to said chamber (20), said filter carrier (25) being positioned within said chamber (20);
ii. A filter element (30) having a first surface and a second surface positioned oppositely to said first surface, said second surface being at least partially attached to said filter carrier (25), said filter element (30) having a plurality of microperforations (40) positioned through said filter element (30), said plurality of microperforations (40) extending from said first surface to said second surface of said filter element (30); and
c. A sealing element (35) positioned onto said wall of said chamber (20) whereby said beverage cartridge (1) is sealed and thereby enclosed;
whereby said beverage filtering device increases the permeability of fluid flowing through said beverage cartridge (1) during brewing.

6. The beverage cartridge (1) of Claim 5 wherein said beverage filtering device operates to release a build up of gas in said beverage cartridge (1) during brewing of said undegassed coffee, said gas being produced from said undegassed coffee.

7. The beverage cartridge (1) of Claims 5 or 6 wherein said filter element (30) comprises open areas positioned on said first surface and said second surface of said filter element (30) that are greater than about 2% of the total surface area of said filter element (30), greater than about 10% of said total surface area of said filter element (30) or greater than about 15% of said total surface area of said filter element (30).

8. The beverage cartridge (1) of any of Claims 5 to 7 wherein said undegassed coffee is freshly ground coffee particles having a maximum gas content and wherein said freshly ground coffee particles are packaged and sealed within said beverage cartridge (1) just after said freshly ground coffee particles are ground by grinding roasted coffee beans, said ground coffee particles having near maximum gas content at packaging of said ground coffee particles.

9. The beverage cartridge (1) of any of Claims 5 to 8 wherein said undegassed coffee is freshly ground dark roasted coffee.

10. The beverage cartridge (1) of any of Claims 5 to 9 wherein said filter element (30) is formed from a cellulosic material, from a non-woven material and/or from one or more types of synthetic fibers.

11. A capsule (1) for use in brewing beverages, encapsulating a filter element (30), the filter element comprising:
a. A first surface;
b. A second surface positioned oppositely to said first surface;
c. A plurality of microperforations (40) positioned through said filter element (30), said plurality of microperforations (40) extending from said first surface to said second surface of said filter element (30); and
d. An open surface on said first surface and said second surface of at least 5% of a total surface area of each said first surface and said second surface;
wherein said filter element (30) allows fluids to pass therethrough for brew of a beverage; and
wherein the capsule (1) contains undegassed coffee.

12. The filter element (30) of claim 11 wherein said open surface on said first surface
and said second surface of said filter element (30) is greater than about 10% of said total
surface area of said filter element (30) or greater than about 15% of said total surface area of said filter element (30).

13. The beverage cartridge (1) or filter element (30) of any one of Claims 5 to 12 wherein said permeability of fluid flowing through said beverage cartridge (1) or filter element (30) during brewing comprises liquid flowing through said beverage cartridge (1) or filter element (30) and/or wherein said permeability of fluid flowing through said beverage cartridge (1) or filter element (30) during brewing comprises gas flowing through said beverage cartridge (1) or filter element (30).

14. The beverage cartridge (1) or filter element (30) of any one of Claims 5 to 13 wherein each said microperforation (40) comprises an average diameter ranging from between about 0.1 mm to about 0.8 mm, from between about 0.2 mm to about 0.7 mm or from between about 0.3 mm to 0.6 mm.

15. The coffee cartridge (1), beverage cartridge (1) or filter element (30) of any of the preceding Claims wherein said number of microperforations (40) within said membrane (30) or filter element (30) ranges from between about 2 to about 1000 microperforations (40) or from between about 10 to about 500 microperforations (40).

## Patentansprüche

1. Kaffeepatrone (1) zur Verwendung mit frisch geröstetem und gemahlenem Kaffee in einer geeigneten Getränkbrühvorrichtung, umfassend:
a. Frisch gerösteten und gemahlenen, unentgasten Kaffee;
b. Eine Membran (30), wobei die Membran (30) den frisch gerösteten und gemahlenen, unentgasten Kaffee einschließt;
c. Eine Anzahl von Mikroperforationen (40), welche in der Membran (30) für die Freigabe von Gas von dem frisch gerösteten und gemahlenen, unentgasten Kaffee während eines Brühens angeordnet sind; und
d. Eine halbstarre Struktur, welche die Membran (30) einschließt.

2. Kaffeepatrone (1) nach Anspruch 1, wobei der frisch gemahlene Kaffee unverzüglich innerhalb der Membran (30) platziert wird, sobald der frisch gemahlene Kaffee durch ein Mahlen von Kaffeebohnen gemahlen worden ist.

3. Kaffeepatrone (1) nach einem der Ansprüche 1 oder 2, wobei frisch gemahlener Kaffee dunkel geröstet ist.

4. Kaffeepatrone (1) nach einem der Ansprüche 1 bis 3, wobei die Membran (30) aus Nicht-Gewebten und/oder aus einer oder mehreren Arten von synthetischen Fasern gebildet ist.

5. Getränkepatrone (1) zur Verwendung in einer Getränkeherstellungsvorrichtung, umfassend:
a. Eine Kammer (20), wobei die Kammer (20) mindestens einen im Wesentlichen abgeschlossenen Abschnitt aufweist, wobei der wenigstens eine im Wesentlichen abgeschlossene Abschnitt eine Basis mit einem Umfang und eine Wand aufweist, welche mit dem Umfang der Basis verbunden ist, wobei die Kammer (20) unentgasten Kaffee darin aufnimmt und beherbergt;
b. Eine Getränkefiltervorrichtung, aufweisend
i. Eine Filtertragevorrichtung (25), welche mit der Kammer (20) betriebsmäßig verbunden ist, wobei der Filterträger (25) in der Kammer (20) angeordnet ist;
ii. Ein Filterelement (30), welches eine erste Fläche und eine zweite Fläche aufweist, welche der ersten Fläche gegenüberliegend angeordnet ist, wobei die zweite Fläche wenigstens teilweise an dem Filterträger (25) angebracht ist, wobei das Filterelement (30) eine Mehrzahl von Mikroperforationen (40) aufweist, welche durch das Filterelement (30) angeordnet sind, wobei sich die Mehrzahl von Mikroperforationen (40) von der ersten Fläche zu der zweiten Fläche des Filterelements (30) erstrecken; und
c. Ein Dichtungselement (35), welches an der Wand der Kammer (20) angeordnet ist, wodurch die Getränkepatrone (1) abgedichtet und dadurch umschlossen wird;
wodurch die Getränkefiltervorrichtung die Permeabilität eines Fluids, welches durch die Getränkepatrone (1) während eines Brühens strömt, erhöht.

6. Getränkepatrone (1) nach Anspruch 5, wobei die Getränkefiltervorrichtung dazu dient, um einen Aufbau eines Gases in der Getränkepatrone (1) während eines Brühens des unentgasten Kaffes freizugeben, wobei das Gas von dem unentgasten Kaffee produziert wird.

7. Getränkepatrone (1) nach Anspruch 5 oder 6, wobei das Filterelement (30) an der ersten Fläche und der zweiten Fläche des Filterelements (30) angeordnete offene Bereiche umfasst, welche größer als ungefähr 2% des Gesamtflächenbereichs des Filterelements (30), größer als ungefähr 10% des Gesamtflächenbereichs des Filterelements (30) oder größer als ungefähr 15% des Gesamtflächenbereichs des Filterelements (30) sind.

8. Getränkepatrone (1) nach einem der Ansprüche 5 bis 7, wobei der unentgaste Kaffee aus frisch gemahlenen Kaffeepartikeln besteht, welche einen maximalen Gasgehalt aufweisen, und wobei die frisch gemahlenen Kaffeepartikel innerhalb der Getränkepatrone (1) verpackt und versiegelt werden, direkt nachdem die frisch gemahlenen Kaffeepartikel durch Malen gerösteter Kaffeebohnen gemahlen worden sind, wobei die gemahlenen Kaffeepartikel beim Verpacken der gemahlenen Kaffeepartikel einen nahezu maximalen Gasgehalt aufweisen.

9. Getränkepatrone (1) nach einem der Ansprüche 5 bis 8, wobei der unentgaste Kaffee frisch gemahlener, dunkel gerösteter Kaffee ist.

10. Getränkepatrone (1) nach einem der Ansprüche 5 bis 9, wobei das Filterelement (30) aus einem Zellulosematerial, aus einem nicht-gewebten Material und/oder aus einer oder mehreren Arten von synthetischen Fasern gebildet ist.

11. Kapsel (1) zur Verwendung beim Brühen von Getränken, welche ein Filterelement (30) einschließt, wobei das Filterelement umfasst:
a. Eine erste Fläche;
b. Eine zweite Fläche, welche der ersten Fläche gegenüberliegend angeordnet ist;
c. Eine Mehrzahl von Mikroperforationen (40), welche durch das Filterelement (30) angeordnet sind, wobei sich die Mehrzahl von Mikro-perforationen (40) von der ersten Fläche zu der zweiten Fläche des Filterelements (30) erstrecken; und
d. Eine offene Fläche an der ersten Fläche und der zweiten Fläche von wenigstens 5% eines Gesamtflächenbereichs von sowohl der ersten Fläche als auch der zweiten Fläche;
wobei das Filterelement (30) Fluiden erlaubt, dort hindurchzutreten, um ein Getränk zu brühen; und
wobei die Kapsel (1) unentgasten Kaffee enthält.

12. Filterelement (30) nach Anspruch 11, wobei die offene Fläche an der ersten Fläche und der zweiten Fläche des Filterelements (30) größer als ungefähr 10% des Gesamtflächenbereichs des Filterelements (30) oder größer als ungefähr 15% des Gesamtflächenbereichs des Filterelements (30) ist.

13. Getränkepatrone (1) oder Filterelement (30) nach einem der Ansprüche 5 bis 12, wobei die Permeabilität von Fluid, welches durch die Getränkepatrone (1) oder das Filterelement (30) während eines Brühens strömt, eine Flüssigkeit umfasst, welche durch die Getränkepatrone (1) oder das Filterelement (30) strömt, und/oder wobei die Permeabilität eines Fluids, welches durch die Getränkepatrone (1) oder das Filterelement (30) während eines Brühens strömt, ein Gas umfasst, welches durch die Getränkepatrone (1) oder das Filterelement (30) strömt.

14. Getränkepatrone (1) oder Filterelement (30) nach einem der Ansprüche 5 bis 13, wobei jede der Mikroperforationen (40) einen durchschnittlichen Durchmesser umfasst, welcher sich in einem Bereich von ungefähr 0,1 mm bis ungefähr 0,8 mm, von ungefähr 0,2 mm bis ungefähr 0,7 mm oder von ungefähr 0,3 mm bis 0,6 mm bewegt.

15. Kaffeepatrone (1), Getränkepatrone (1) oder Filterelement (30) nach einem der vorhergehenden Ansprüche, wobei die Anzahl von Mikroperforationen (40) innerhalb der Membran (30) oder dem Filterelement (30) sich in einem Bereich von ungefähr 2 bis ungefähr 1000 Mikroperforationen (40) oder von ungefähr 10 bis ungefähr 500 Mikroperforation (40) bewegt.

## Revendications

1. Cartouche de café (1) pour une utilisation avec du café fraîchement torréfié et moulu dans un dispositif d'infusion de boisson approprié, comprenant :
a. du café non dégazé fraîchement torréfié et moulu ;
b. une membrane (30), ladite membrane (30) encapsulant ledit café non dégazé fraîchement torréfié et moulu ;
c. un certain nombre de micro-perforations (40) positionnées dans ladite membrane (30) pour la libération du gaz à partir dudit café non dégazé fraîchement torréfié et moulu durant l'infusion ; et
d. une structure semi-rigide encapsulant ladite membrane (30).

2. Cartouche de café (1) de la revendication 1, dans laquelle ledit café fraîchement moulu est immédiatement placé à l'intérieur de ladite membrane (30) une fois ledit café fraîchement moulu est broyé par broyage de grains de café.

3. Cartouche de café (1) de l'une des revendications 1 ou 2, dans laquelle du café fraîchement moulu est du café noir.

4. Cartouche de café (1) de l'une des revendications 1 à 3, dans laquelle ladite membrane (30) est formée de non-tissés et/ou d'un ou de plusieurs types de fibres synthétiques.

5. Cartouche de boisson (1) pour une utilisation dans un appareil de préparation de boisson, comprenant :
a. une chambre (20), ladite chambre (20) ayant au moins une partie essentiellement fermée, ladite au moins une partie essentiellement fermée ayant une base avec un périmètre et une paroi reliée audit périmètre de ladite base, ladite chambre (20) recevant et logeant du café non dégazé dedans ;
b. un dispositif de filtration de boisson, ayant
i. un dispositif support de filtre (25) relié de manière fonctionnelle à ladite chambre (20), ledit support de filtre (25) étant positionné à l'intérieur de ladite chambre (20) ;
ii. un élément filtrant (30) ayant une première surface et une deuxième surface positionnée de manière opposée à ladite première surface, ladite deuxième surface étant au moins partiellement fixée audit support de filtre (25), ledit élément filtrant (30) ayant une pluralité de micro-perforations (40) positionnées à travers ledit élément filtrant (30), ladite pluralité de micro-perforations (40) s'étendant à partir de ladite première surface jusqu'à ladite deuxième surface dudit élément filtrant (30) ; et
c. un élément d'étanchéité (35) positionné sur ladite paroi de ladite chambre (20) moyennant quoi ladite cartouche de boisson (1) est scellée et ainsi enfermée ;
moyennant quoi ledit dispositif de filtration de boisson augmente la perméabilité du fluide s'écoulant à travers ladite cartouche de boisson (1) durant l'infusion.

6. Cartouche de boisson (1) de la revendication 5, dans laquelle ledit dispositif de filtration de boisson fonctionne pour libérer une accumulation de gaz dans ladite cartouche de boisson (1) durant l'infusion dudit café non dégazé, ledit gaz étant produit à partir dudit café non dégazé.

7. Cartouche de boisson (1) des revendications 5 ou 6, dans laquelle ledit élément filtrant (30) comprend des superficies ouvertes positionnées sur ladite première surface et sur ladite deuxième surface dudit élément filtrant (30) qui sont supérieures à environ 2% de la surface totale dudit élément filtrant (30), supérieures à environ 10% de ladite surface totale dudit élément filtrant (30) ou supérieures à environ 15% de ladite surface totale dudit élément filtrant (30).

8. Cartouche de boisson (1) de l'une des revendications 5 à 7, dans laquelle ledit café non dégazé représente des particules de café fraîchement moulues ayant une teneur maximale en gaz et dans laquelle lesdites particules de café fraîchement moulues sont emballées et scellées à l'intérieur de ladite cartouche de boisson (1) juste après que lesdites particules de café fraîchement moulues sont broyées par broyage de grains de café torréfiés, lesdites particules de café moulues ayant une teneur presque maximale en gaz au moment de l'emballage desdites particules de café moulues.

9. Cartouche de boisson (1) de l'une des revendications 5 à 8, dans laquelle ledit café non dégazé est du café noir fraîchement moulu.

10. Cartouche de boisson (1) de l'une des revendications 5 à 9, dans laquelle ledit élément filtrant (30) est formé d'un matériau cellulosique, d'un matériau non-tissé et/ou d'un ou de plusieurs types de fibres synthétiques.

11. Capsule (1) pour une utilisation dans l'infusion des boissons, encapsulant un élément filtrant (30), l'élément filtrant comprenant :
a. une première surface ;
b. une deuxième surface positionnée de manière opposée à ladite première surface ;
c. une pluralité de micro-perforations (40) positionnées à travers ledit élément filtrant (30), ladite pluralité de micro-perforations (40) s'étendant depuis ladite première surface vers ladite deuxième surface dudit élément filtrant (30) ; et
d. une surface ouverte sur ladite première surface et sur ladite deuxième surface d'au moins 5% d'une surface totale de chacune parmi ladite première surface et ladite deuxième surface ;
dans laquelle ledit élément filtrant (30) permet à des fluides de le traverser pour infuser une boisson ; et
dans laquelle la capsule (1) contient du café non dégazé.

12. Élément de filtre (30) de la revendication 11, dans lequel ladite surface ouverte sur ladite première surface et sur ladite deuxième surface dudit élément filtrant (30) est supérieure à environ 10% de ladite surface totale dudit élément filtrant (30) ou supérieure à environ 15% de ladite surface totale dudit élément filtrant (30).

13. Cartouche de boisson (1) ou élément filtrant (30) de l'une des revendications 5 à 12, dans laquelle ladite perméabilité du fluide s'écoulant à travers ladite cartouche de boisson (1) ou ledit élément filtrant (30) durant l'infusion comprend un liquide s'écoulant à travers ladite cartouche de boisson (1) ou ledit élément filtrant (30) et/ou dans laquelle ladite perméabilité du fluide s'écoulant à travers ladite cartouche de boisson (1) ou ledit élément filtrant (30) durant l'infusion comprend un gaz s'écoulant à travers ladite cartouche de boisson (1) ou ledit élément filtrant (30).

14. Cartouche de boisson (1) ou élément filtrant (30) de l'une quelconque des revendications 5 à 13, dans laquelle chacune desdites micro-perforations (40) comprend un diamètre moyen compris entre environ 0,1 mm et environ 0,8 mm, entre environ 0,2 mm et environ 0,7 mm ou entre environ 0,3 mm et 0,6 mm.

15. Cartouche de café (1), cartouche de boisson (1) ou élément filtrant (30) de l'une des revendications précédentes, où ledit nombre de micro-perforations (40) dans ladite membrane (30) ou ledit élément filtrant (30) est compris entre environ 2 et environ 1000 micro-perforations (40) ou entre environ 10 et environ 500 micro-perforations (40).
